# EUROPÄISCHE PATENTANMELDUNG

(11) **EP 1 100 281 A2**
(43) Veröffentlichungstag der Anmeldung: **16.05.2001**
(21) Anmeldenummer: 00118094.2
(22) Anmeldetag: 23.08.2000
(51) Int. Cl.: H04Q 3/545

(54) **Zentrale Behandlung von Telekommunikationsverbindungen in einer Nebenstellenanlage**

(30) Priorität: 13.11.1999 DE 19954805
(71) Anmelder: Tenovis GmbH & Co. KG, 60326 Frankfurt (DE)
(72) Erfinder: Menk, Klaus-Dieter, 65597 Hünfelden-Ohren (DE); Sprotte, Ralf, 74321 Bietigheim-Bissingen (DE); Halfmann, Jörg, 68163 Mannheim (DE); Haack, Reiner, Canada, TOG1EO (CA)
(74) Vertreter: Bohnenberger, Johannes, Dr.

(57) **Zusammenfassung**

Es wird eine Vorrichtung (10) zum Betrieb mit einem Telekommunikationssystem (20) und ein Verfahren zur Steuerung wenigstens einer Telekommunikationsverbindung (100) vorgeschlagen, wobei die Vorrichtung (10) und das Telekommunikationssystem (20) über eine Schnittstelle (15) verbunden sind, wobei die wenigstens eine Telekommunikationsverbindung (100) über einen ersten Kommunikationskanal (26) einer ersten Gruppe (26 - 28) von Kommunikationskanälen des Telekommunikationssystems (20) führbar ist, wobei mehrere Endeinrichtungen (40 - 42) an das Telekommunikationssystem (20) über eine zweite Gruppe (30 - 32) von Telekommunikationskanälen angebunden sind und wobei die Vorrichtung (10) die wenigstens eine Telekommunikationsverbindung (100) an die verschiedenen Endeinrichtungen (40 - 42) weiterleitet und die Verwaltung darüber übernimmt.

## Beschreibung

### Stand der Technik

Die Erfindung geht aus von einer Vorrichtung zum Betrieb mit einem Telekommunikationssystem und von einem Verfahren zur Steuerung wenigstens einer Telekommunikationsverbindung nach der Gattung der nebengeordneten Patentansprüche. Es ist bekannt, Telekommunikationsverbindungen durch ein Anrufverteilungssystem mit verschiedenen internen und externen Endeinrichtungen zu verbinden. Während der Zeit, in der eine solche Telekommunikationsverbindung aktiv ist, können mehrere solcher Endeinrichtungen beteiligt sein. Hierzu sind in den verschiedenen Endeinrichtungen intelligente Steuerungseinrichtungen integriert, um die Durchführung von vermittlungstechnischen Funktionalitäten, wie beispielsweise "Rückfrage" oder "Umlegen", durch Endeinrichtungen zu gewährleisten.

### Vorteile der Erfindung

Die erfindungsgemäße Vorrichtung zum Betrieb mit einem Telekommunikationssystem und das Verfahren zur Steuerung wenigstens einer Telekommunikationsverbindung mit den Merkmalen der nebengeordneten Patentansprüche haben demgegenüber den Vorteil, daß eine zentrale Behandlung von Telekommunikationsverbindungen durch ein Anrufverteilungssystem bzw. eine Vorrichtung ermöglicht wird. Dies ermöglicht es, zu jedem Zeitpunkt die Kontrolle einer Telekommunikationsverbindung in dem Anrufverteilungssystem zu zentralisieren. Die beteiligten Endeinrichtungen kommen dadurch mit Steuerungen aus, die weniger komplex sind, weil sie auf komplexe vermittlungstechnische Funktionalitäten, wie beispielsweise "Rückfrage" oder "Umlegen" verzichten können und daher kostengünstiger und leichter einzurichten sind.

Das Anrufverteilsystem muß eine Anfrage an eine zweite Endeinrichtung erst zum Zeitpunkt der Beendigung eines Kommunikationsschrittes mit einer ersten Endeinrichtung richten, was zur besseren Auslastung der Endeinrichtungen führt.

Durch die in den Unteransprüchen aufgeführten Maßnahmen sind vorteilhafte Weiterbildungen und Verbesserungen der im unabhängigen Vorrichtungsanspruch angegebenen Vorrichtung möglich.

Besonders vorteilhaft ist, daß die Vorrichtung zur gleichzeitigen Steuerung einer Vielzahl von Telekommunikationsverbindungen vorgesehen ist. Dadurch ist es möglich, daß eine einzige erfindungsgemäße Vorrichtung oder eine vergleichsweise geringe Zahl von erfindungsgemäßen Vorrichtungen mit einem Telekommunikationssystem zur Steuerung einer großen Anzahl von Telekommunikationsverbindungen eingesetzt wird.

Weiterhin ist von Vorteil, daß interaktive Endeinrichtungen und/oder passive Endeinrichtungen an das Telekommunikationssystem angebunden sind. Dadurch ist es möglich, je nach vorgesehener Steuerung einer Telekommunikationsverbindung deren optimale Behandlung sicherzustellen, indem beispielsweise beim Bedarf der Abfrage einer von dem Telekommunikationsteilnehmer der Telekommunikationsverbindung abfragbaren Information eine interaktive Endeinrichtung und bei dem bloßen Wunsch, den Telekommmunikationsteilnehmer der Telekommunikationsverbindung zu informieren, eine passive Endeinrichtung benutzt wird.

Weiterhin ist es von Vorteil, daß Ansageeinrichtungen, insbesondere zur Begrüßung, zur Vorhaltung in einer Warteschleife und zur Verabschiedung, an das Telekommunikationssystem angebunden sind. Dies ermöglicht eine komfortable und kundenfreundliche Teilnehmerführung des Telekommunikationsteilnehmers der Telekommunikationsverbindung.

Weiterhin ist von Vorteil, daß die Endeinrichtungen zumindest teilweise über eine Funkschnittstelle und daß die Endeinrichtungen extern und/oder intern angebunden sind. Hierdurch ist eine sehr flexible Architektur des Telekommunikationssystems und der an dieses angebundenen Endeinrichtungen möglich.

### Zeichnung

Ein Ausführungsbeispiel der Erfindung ist in der Zeichnung. dargestellt und in der nachfolgenden Beschreibung näher erläutert. Es zeigen
Figur 1 eine an ein Telekommunikationssystem angeschlossene erfindungsgemäße Vorrichtung mit mehreren Endeinrichtungen und
Figur 2 ein Protokollschema der Kommunikation zwischen dem Telekommunikationssystem, der erfindungsgemäßen Vorrichtung und den Endeinrichtungen.

### Beschreibung des Ausführungsbeispiels

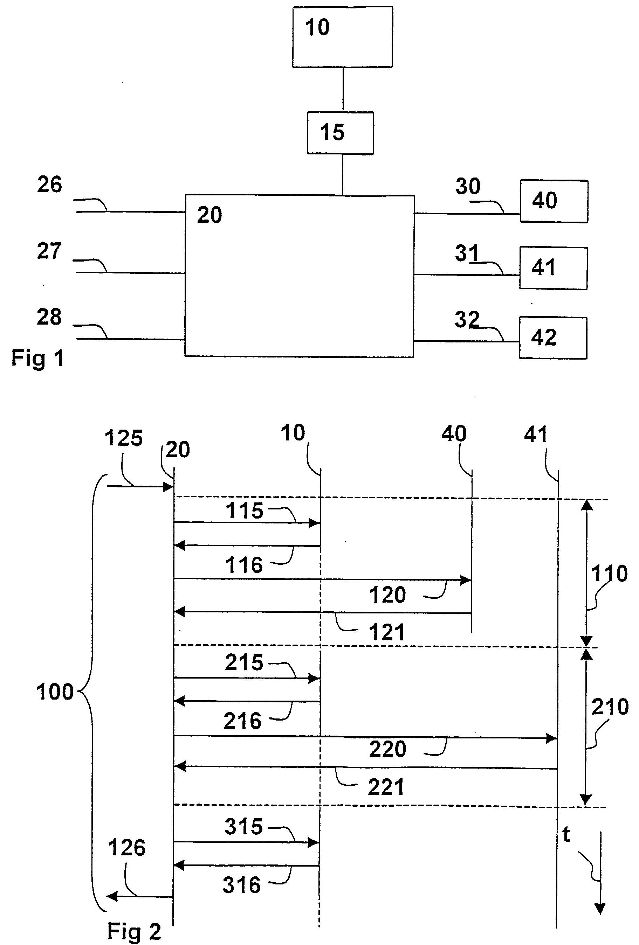

Figur 1 stellt eine Vorrichtung 10 zum Betrieb mit einem Telekommunikationssystem 20 dar, wobei die Vorrichtung 10 mit dem Telekommunikationssystem 20 über eine Schnittstelle 15 verbunden ist. Für die Kommunikation mit dem

Telekommunikationssystem 20 weist die Vorrichtung 10 nicht dargestellte Eingänge und Ausgänge auf, die mit der Schnittstelle 15 verbunden sind und mit dieser gemäß einem gemeinsamen Protokoll kommunizieren. Entsprechend weist das Telekommunikationssystem 20 ebenfalls nicht dargestellte Eingänge und Ausgänge auf, die mit der Schnittstelle 15 zur Kommunikation mit der Vorrichtung 10 über die Schnittstelle 15 verbunden werden. Das Telekommunikationssystem 20 weist eine Reihe von Kommunikationskanälen auf, über welche eine oder mehrere Verbindungen zwischen dem Telekommunikationssystem 20 und einem oder mehreren Teilnehmern und/oder zwischen dem Telekommunikationssystem 20 und einer oder mehrerer an diese angeschlossener Einrichtung(en) führbar sind. In der Regel handelt es sich um eine Vielzahl von Kommunikationskanälen, für die die Figur 1 stellvertretend einen ersten Kommunikationskanal 26, einen zweiten Kommunikationskanal 27, einen dritten Kommunikationskanal 28, einen vierten Kommunikationskanal 30, einen fünften Kommunikationskanal 31 und einen sechsten Kommunikationskanal 32 darstellt.

Die Kommunikationskanäle 26 - 28, 30 - 32 werden zum Zweck der Beschreibung der Erfindung in eine erste Gruppe 26 - 28 von Kommunikationskanälen und in eine zweite Gruppe 30 - 32 von Kommunikationskanälen eingeteilt. Die erste Gruppe 26 - 28 von Kommunikationskanälen dient der Verbindung des Telekommunikationssystems 20 mit internen oder externen Telekommunikationsteilnehmern. Die erste Gruppe 26 - 28 von Kommunikationskanälen ist schaltbar ausgeführt, d.h. die Anzahl von Kommunikationskanälen innerhalb der ersten Gruppe 26 - 28 von Kommunikationskanälen gibt die maximale Anzahl der parallel verarbeitbaren Verbindungen des Telekommunikationssystems 20 dar. Bei einem Verbindungswunsch eines beispielsweise externen Teilnehmers mit dem Telekommunikationssystem 20 wird einer der Kommunikationskanäle der ersten Gruppe 26 - 28 diesem Teilnehmer zur Verfügung gestellt.

Über den vierten Kommunikationskanal 30 ist eine erste Endeinrichtung 40 mit dem Telekommunikationssystem 20 verbunden. In entsprechender Weise ist eine zweite Endeinrichtung 41 und eine dritte Endeinrichtung 42 über den fünften Kommunikationskanal 31 bzw. den sechsten Kommunikationskanal 32 an das Kommunikationssystem angeschlossen. Die Kommunikationskanäle der zweiten Gruppe 30 - 32 von Kommunikationskanälen sind erfindungsgemäß als logische Kommunikationskanäle aufzufassen, wobei die physikalische Realisierung der Verbindung zwischen dem Telekommunikationssytem 20 und den Endeinrichtungen 40 - 42 unterschiedlich ausgeführt sein kann. Beispielsweise können die Endeinrichtungen 40 - 42 an das Telekommunikationssystem mittels einer Funkschnittstelle oder mittels einer Drahtschnittstelle angebunden sein. Weiterhin können die Endeinrichtungen 40 - 42 extern und/oder intern angebunden sein, d.h. die Endeinrichtungen können ganz oder teilweise in das Telekommunikationssystem 20 integriert sein, in räumlicher Nähe zum Telekommunikationssystem 20 angeordnet sein oder an einem entfernten Standort vorgesehen sein. In einer ersten Ausführungsform der Erfindung unterscheiden sich die Kommunikationskanäle der ersten Gruppe 26 - 28 von den Kommunikationskanälen der zweiten Gruppe 30 - 32 physikalisch; in einer zweiten Ausführungsform der Erfindung sind die Kommunikationskanäle 26 - 28, 30 - 32 physikalisch identisch aufgebaut und funktionieren auch identisch, d.h. die Kommunikationskanäle der zweiten Gruppe 30-32 sind ebenfalls schaltbar ausgeführt und sind für eine Verbindung mit einer Endeinrichtung 40-42 nur während der Zeit belegt, während der die Endeinrichtung benötigt wird. Die Unterscheidung zwischen der ersten Gruppe 26 - 28 von Kommunikationskanälen und der zweiten Gruppe 30 - 32 von Kommunikationskanälen bezieht sich bei der zweiten Ausführungsform der Erfindung lediglich darauf, daß über die erste Gruppe 26 - 28 von Kommunikationskanälen interne oder externe Teilnehmer mit dem Telekommunikationssystem 20 verbunden werden, die an diesem Dienste anfragen, währenddem die zweite Gruppe 30 - 32 von Kommunikationskanälen vorgesehen ist, das Telekommunikationssystem mit Endeinrichtungen 40 - 42 zu verbinden, die die angefragten Dienste, beispielsweise Begrüßung, Auswahl eines Menüpunktes, individuelle Beratung, Verabschiedung oder dergleichen, bereitstellen.

Die Funktionsweise der erfindungsgemäßen Vorrichtung 10 zum Betrieb mit dem Telekommunikationssystem 20 ist in Figur 2 anhand eines Protokollschemas für die Steuerung bzw. Bearbeitung einer Telekommunikationsverbindung 100 dargestellt. Die Telekommunikationsverbindung 100 wird von einem internen oder externen Teilnehmer mittels einer Verbindungsanfrage 125 an das Telekommunikationssystem 20 eingeleitet. Dies verdeutlicht ein waagerechter erster Pfeil 125, der auf eine senkrechte erste Linie 20 weist. Die senkrechte erste Linie 20 stellt im Hinblick auf das Signalisierungsprotokoll das Telekommunikationssystem 20 dar. Weiterhin ist eine senkrechte und teilweise gestrichelt ausgeführte zweite Linie 10 vorgesehen, die die erfindungsgemäße Vorrichtung 10 innerhalb des Signalisierungsdiagramms repräsentiert. Als weitere senkrechte Linien sind im Signalisierungsprotokoll eine dritte Linie 40, die die erste Endeinrichtung 40 repräsentiert, und eine vierte Linie 41, die die zweite Endeinrichtung 41 repräsentiert, vorgesehen. Der zeitliche Verlauf der Telekommunikationsverbindung 100 wird in Figur 2 durch eine Abfolge von waagrechten Pfeilen von oben nach unten repräsentiert, was durch einen senkrechten dreizehnten Pfeil t angedeutet ist. Zeitlich nach dem Beginn der Verbindung mittels der Verbindungsanfrage 125 sieht die erfindungsgemäße Vorrichtung 10 und das erfindungsgemäße Verfahren eine erste Anfrage 115 des Telekommunikationssystems 20 an die Vorrichtung 10 vor. Die erste Anfrage 115 ist durch einen von der ersten Linie 20 zur zweiten Linie 10 weisenden waagrechten zweiten Pfeil 115 repräsentiert. Die erste Anfrage 115 beinhaltet im wesentlichen die Frage des Telekommunikationssystems 20 an die Vorrichtung 10, wohin, d.h. an welche der Endeinrichtungen 40 bis 42, die mittels der Verbindungsanfrage 125 begonnene Telekommunikationsverbindung 100 weiterzureichen ist. Die Information hierüber wird mittels einer ersten Antwort 116 von der Vorrichtung 10 an das Telekommunikationssystem 20 übertragen, wofür in Figur 2 ein von der zweiten Linie 10 zur ersten Linie 20 weisender waagrechter dritter Pfeil 116 vorgesehen ist. Die zeitliche Abfolge zwischen der ersten Anfrage 115 und der ersten Antwort 116 ist in Figur 2 im Sinne des oben angesprochenen Zeitverlaufs derart dargestellt, daß der dritte Pfeil 116 unterhalb des zweiten Pfeils 115 angeordnet ist. Auf entsprechende Weise folgen die im weiteren Verlauf der Telekommunikationsverbindung 100 zwischen dem Telekommunikationssystem 20 und der Vorrichtung 10 bzw. den Endeinrichtungen 40 bis 42 durchgeführten Signalisierungen dem Zeitverlauf gemäß dem dreizehnten Pfeil t und sind in Figur 2 entsprechend von oben nach unten angeordnet. Mittels der in der ersten Antwort 116 enthaltenen Informationen ist das Telekommunikationssystem 20 nunmehr in der Lage, die Telekommunikationsverbindung 100 an eine Bestimmte der Endeinrichtungen 40 bis 42 weiterzureichen. Im in der Figur 2 beschriebenen Ausführungsbeispiel ist dies die erste Endeinrichtung 40, an die die aktive Telekommunikationsverbindung 100 mittels einer ersten Weiterreichung 120 - in Fig. 2 dargestellt durch einen waagrechten vierten Pfeil 120, der von der ersten Linie 20 zur dritten Linie 40 weist - weitergereicht wird. Die erste Endeinrichtung 40 behandelt nun die Telekommunikationsverbindung 100 auf eine vorgegebene Weise, beispielsweise dadurch, daß die erste Endeinrichtung 40 einen gespeicherten Ansagetext wiedergibt. In diesem Fall ist die Telekommunikationsverbindung 100 über beispielsweise den ersten Kommunikationskanal 26 und den vierten Kommunikationskanal 30 zur ersten Endeinrichtung 40 durchgeschaltet. Es besteht somit eine direkte Verbindung zwischen dem die Telekommunikationsverbindung initiierenden internen bzw. externen Teilnehmer und der ersten Endeinrichtung 40. Nach dem Erreichen eines Abbruchkriteriums, beispielsweise das Erreichen des Endes einer Ansageinformation, wird die Telekommunikationsverbindung 100 mittels einer ersten Rückgabe 121 - in Fig. 2 dargestellt durch einen waagrechten und von der dritten Linie 40 zur ersten Linie 20 weisenden fünften Pfeil 121 - von der ersten Endeinrichtung 40 an das Telekommunikationssystem 20 zurückgegeben. Hierbei endet ein erster Schritt 110 der Telekommunikationsverbindung 100, der die Verbindung des die Telekommunikationsverbindung 100 initiierenden Teilnehmers mit der ersten Endeinrichtung 40 zum Ziel hat und aus den Teilen "erste Anfrage 115", "erste Antwort 116", "erste Weiterreichung 120" und "erste Rückgabe 121" besteht.

Nachdem die Telekommunikationsverbindung 100 an das Telekommunikationssystem 20 mittels der ersten Rückgabe 121 zurückgegeben wurde, fragt das Telekommunikationssystem 20 mittels einer zweiten Anfrage 215 - in Fig. 2 dargestellt durch einen waagrechten und von der ersten Linie 20 zur zweiten Linie 10 weisenden sechsten Pfeil 215 - das Ziel für einen zweiten Schritt 210 der Telekommunikationsverbindung 100 ab. Die Vorrichtung 10 überträgt die angefragte Information mittels einer zweiten Antwort 216 - in Fig. 2 dargestellt durch einen waagrechten und von der zweiten Linie 10 zur ersten Linie 20 weisenden siebenten Pfeil 216 - an das Telekommunikationssystem 20. Analog dem ersten Schritt 110 wird nun die Telekommunikationsverbindung 100 an eine der Endeinrichtungen 40 bis 42, beispielsweise die zweite Endeinrichtung 41, mittels einer zweiten Weiterreichung 220 - in Fig. 2 dargestellt durch einen waagrechten und von der ersten Linie 20 zur vierten Linie 41 weisenden achten Pfeil 220 - weitergereicht. Nach Beendigung der Kommunikation des die Telekommunikationsverbindung 100 initiierenden Teilnehmers mit der zweiten Endeinrichtung 41 wird die Telekommunikationsverbindung 100 von der zweiten Endeinrichtung 41 nach dem Erreichen einer Abbruchbedingung mittels einer zweiten Rückgabe 221 - in Fig. 2 dargestellt durch einen waagrechten und von der vierten Linie 41 zur ersten Linie 20 weisenden neunten Pfeil 221 - an das Telekommunikationssystem 20 zurückgegeben, womit ein zweiter Schritt 210 der Telekommunikationsverbindung 100 endet. Der zweite Schritt 210 besteht, analog dem ersten Schritt 110, aus den Teilen."zweite Anfrage 215", "zweite Antwort 216", "zweite Weiterreichung 220" und "zweite Rückgabe 221".

Mittels einer dritten Anfrage 315 des Telekommunikationssystems 20 an die Vorrichtung 10 - in Fig. 2 dargestellt durch einen waagrechten und von der ersten Linie 20 zur zweiten Linie 10 weisenden zehnten Pfeil 315 - und einer dritten Antwort 316 der Vorrichtung 10 an das Telekommunikationssystem 20 - in Fig. 2 dargestellt durch einen waagrechten und von der zweiten Linie 10 zur ersten Linie 20 weisenden elften Pfeil 316 - erhält das Telekommunikationssystem 20 die Information, daß die Telekommunikationsverbindung 100 mit dem Teilnehmer mittels einer Auslösemeldung 126 - in Fig. 2 dargestellt durch einen waagrechten und von der ersten Linie 20 weg weisenden zwölften Pfeil 126 - beendet werden soll.

Die Anfragen 115, 215, 315 und die Antworten 116, 216, 316 sind Teil einer Kommunikation zwischen dem Telekommunikationssystem 20 und der Vorrichtung 10 zur Steuerung der Telekommunikationsverbindung 100. Diese Kommunikation wird über die Schnittstelle 15 gemäß eines Signalisierungsprotokolls geführt. Solche Ebenen des Signalisierungsprotokolls, in denen die Aktivität der Schnittstelle sichtbar wird, sind der Übersichtlichkeit halber in Figur 2 nicht dargestellt. Die Schnittstelle 15 ist in einer vorteilhaften Ausführungsform der Erfindung entweder in die Vorrichtung 10 bzw. in das Telekommunikationssystem 20 integriert oder auf die Vorrichtung 10 und das Telekommunikationssystem 20 aufgeteilt.

Durch die Kommunikation zwischen dem Telekommunikationssystem 20 und der Vorrichtung 10 wird das Telekommunikationssystem 20 von der Verwaltung der Telekommunikationsverbindung 100 entlastete. Das Telekommunikationssystem 20 ist lediglich bei den Anfragen 115, 215, 315 bzw. den Antworten 116, 216, 316 und den Weiterreichungen 120, 220 bzw. den Rückgaben 121, 221 in die Verwaltung der Telekommunikationsverbindung 100 involviert, währenddem das Telekommunikationssystem 20 während solcher Zeitintervalle, während denen die Verbindung 100 zwischen dem initiierenden Teilnehmer und einer der Endeinrichtungen 40 bis 42 durchgeschaltet ist, bis auf die Sicherstellung der Vermittlungsaufgaben passiv bleibt. Die Anfragen 115, 215, 315 werden von einer nichtdargestellten Steuerung des Telekommunikationssystems 20 erzeugt und den Ein-/Ausgängen des Telekommunikationssystems 20 zur Übertragung an die Vorrichtung 10 zugeführt. Umgekehrt werden die Antworten 116, 216, 316 an den Ein-/Ausgängen empfangen und der Steuerung zugeführt, die in Abhängigkeit davon die Durchschaltung der Kommunikationskanäle 26 - 28, 30 - 32 zu internen oder externen Teilnehmern bzw. Endeinrichtungen steuert. Zur Verarbeitung der bei der Vorrichtung 10 eingegangenen Anfragen 115, 215, 315 und zur Generierung der entsprechenden Antworten 116, 216, 316 umfaßt die Vorrichtung 10 eine nicht dargestellte Steuereinheit und einen nicht dargestellten Speicher.

Der in Figur 2 dargestellte Ablauf ist lediglich als Beispiel zu verstehen; es können selbstverständlich eine Vielzahl von Schritten 110, 210 im Laufe der Telekommunikationsverbindung 100 zu verschiedenen Endeinrichtungen 40 bis 42 aneinander gereiht werden. Es kann weiterhin dieselbe Endeinrichtung 40-42 auch während zweier (vorzugsweise nichtaufeinanderfolgender) Schritte aus einer Vielzahl von Schritten die Telekommunikationsverbindung 100 übernehmen, beispielsweise indem in einem ersten Schritt die erste Endeinrichtung 40, in einem zweiten Schritt die zweite Endeinrichtung 41 und in einem dritten Schritt wieder die erste Endeinrichtung 40 aktiviert ist. Weiterhin ist der Begriff der Endeinrichtung so weit zu fassen, daß darunter auch die teilnehmerindividuelle Bearbeitung eines Verbindungsschritts durch einen menschlichen Bearbeiter fällt. So ist es beispielsweise möglich, daß die Telekommunikationsverbindung 100 zunächst einer Endeinrichtung zugeführt wird, die eine Begrüßungsansage an den initiierenden Teilnehmer übermittelt. In einem zweiten Schritt ist dann vorsehbar, daß die Telekommunikationsverbindung 100 einer interaktiven Endeinrichtung zugeführt wird, die von dem initiierenden Teilnehmer eine Information abfragt. In einem dritten Schritt könnte dann in Abhängigkeit der vom initiierenden Teilnehmer getroffenen Auswahl ein auf die Bearbeitung einer solchen Anfrage spezialisierter Bearbeiter die Telekommunikationsverbindung 100 fortsetzen, bevor die Verbindung beispielsweise in einem vierten Schritt mittels einer Verabschiedungsansage beendet wird. Hierbei bietet die erfindungsgemäße Vorrichtung und das erfindungsgemäße Verfahren den Vorteil, daß die Endeinrichtungen 40 bis 42 jeweils einen Schritt im Ablauf der Telekommunikationsverbindung 100 bearbeiten und keine vermittlungstechnischen Aufgaben für vorangehende oder nachfolgende Verbindungsschritte übernehmen, so daß die Endeinrichtungen 40 bis 42 zum einen einfacher gestaltet werden können und zum anderen flexibler einsetzbar sind.

Durch die Entlastung des Telekommunikationssystems 20 von der Verwaltung der verschiedenen Schritte der Telekommunikationsverbindung 100 ist es möglich, eine Vielzahl von Telekommunikationsverbindungen in der Art der Telekommunikationsverbindung 100 durch das Telekommunikationssystem 20 zu verarbeiten. Die Vorrichtung 10 enthält dazu den nicht dargestellten Speicher, in dem für jede offene Telekommunikationsverbindung 100 die gerade Benutzte der Endeinrichtungen 40 bis 42 und die im nächsten Schritt zu benutzende Endeinrichtung abgelegt sind. Weiterhin wird von der Vorrichtung 10 auch die Verwaltung der Telekommunikationsverbindungen 100 und der Endeinrichtungen 40 bis 42 in Abhängigkeit der Auslastungssituation des Systems verwaltet. Als Beispiel hierfür könnte eine Telekommunikationsverbindung zunächst auf eine interaktive Ansageeinrichtung geschaltet werden und anschließend, wenn alle Bearbeiterplätze belegt sind, in ein Wartefeld vermittelt und aus diesem später zu einem freien Bearbeiterplatz vermittelt werden. Nach der Beendigung der Kommunikation mit dem Bearbeiter wird der Teilnehmer von einer Ansageeinrichtung verabschiedet. Die alleinige Entscheidung über die Art des Fortgangs der Telekommunikationsverbindung liegt stets bei der Vorrichtung 10, die auch als Anrufverteilungssystem bezeichnet werden kann. Dieses Anrufverteilungssystem wird nach jedem Verbindungsschritt erneut befragt und hat damit die Möglichkeit, den Ablauf der Telekommunikationsverbindung 100 den während des Fortschritts der Telekommunikationsverbindung 100 aufgetretenen Ereignissen anzupassen. Durch dieses Prinzip ist es möglich, jede Art von Endeinrichtung in den Ablauf der Anrufverteilung mit einzubinden, denn die betroffenen Endgeräte müssen lediglich in der Lage sein, nach Beendigung ihrer Aktivierung die Verbindung auszulösen.

## Patentansprüche

1. Vorrichtung (10) zum Betrieb mit einem Telekommunikationssystem (20), insbesondere einer Nebenstellenanlage, und zur Steuerung wenigstens einer Telekommunikationsverbindung (100), wobei die Vorrichtung (10) und das Telekommunikationssystem (20) über eine Schnittstelle (15) verbunden sind, wobei die wenigstens eine Telekommunikationsverbindung (100) über einen Kommunikationskanal einer ersten Gruppe (26 - 28) von Kommunikationskanälen des Telekommunikationssystems (20) führbar ist, wobei mehrere Endeinrichtungen (40 - 42) an das Telekommunikationssystem (20) über eine zweite Gruppe (30 - 32) von Kommunikationskanälen angebunden sind, wobei die Vorrichtung (10) Mittel umfaßt, mit dem Telekommunikationssystem (20) über die Schnittstelle (15) Steuerinformationen (115, 116, 215, 216, 315, 316) zur Behandlung der Telekommunikationsverbindung (100) auszutauschen und wobei das Telekommunikationssystem (20) Mittel umfaßt, in Abhängigkeit der mit der Vorrichtung (10) ausgetauschten Steuerinformationen (115, 116, 215, 216, 315, 316) eine Abfolge von verschiedenen Durchschaltungen des ersten Kommunikationskanals (26) zu jeweils einem der zweiten Gruppe (30 - 32) von Kommunikationskanälen zu bewirken.

2. Vorrichtung (10) nach Anspruch 1, dadurch gekennzeichnet, daß die Vorrichtung (10) zur gleichzeitigen Steuerung einer Vielzahl von Telekommunikationsverbindungen (100) vorgesehen ist.

3. Vorrichtung (10) nach Anspruch 1 oder 2, dadurch gekennzeichnet, daß interaktive Endeinrichtungen an das Telekommunikationssystem (20) angebunden sind.

4. Vorrichtung (10) nach Anspruch 1 oder 2, dadurch gekennzeichnet, daß passive Endeinrichtungen an das Telekommunikationssystem (20) angebunden sind.

5. Vorrichtung (10) nach Anspruch 1 oder 2, dadurch gekennzeichnet, daß Ansageeinrichtungen, insbesondere zur Begrüßung, zur Vorhaltung in einer Warteschleife und zur Verabschiedung, an das Telekommunikationssystem (20) angebunden sind.

6. Vorrichtung (10) nach einem der Ansprüche 1 bis 5, dadurch gekennzeichnet, daß die Endeinrichtungen (40-42) zumindest teilweise über eine Funkschnittstelle angebunden sind.

7. Vorrichtung (10) nach einem der Ansprüche 1 bis 6, dadurch gekennzeichnet, daß die Endeinrichtungen (40-42) extern und/oder intern angebunden sind.

8. Verfahren zur Steuerung wenigstens einer Telekommunikationsverbindung (100) durch eine Vorrichtung (10) zum Betrieb mit einem Telekommunikationssystem (20), insbesondere einer Nebenstellenanlage, wobei die Vorrichtung (10) und das Telekommunikationssystem (20) über eine Schnittstelle (15) verbunden werden, wobei die wenigstens eine Telekommunikationsverbindung (100) über einen Kommunikationskanal einer ersten Gruppe (26 - 28) von Kommunikationskanälen des Telekommunikationssystems (20) geführt wird, wobei mehrere Endeinrichtungen (40 - 42) an das Telekommunikationssystem (20) über eine zweite Gruppe (30 - 32) von Kommunikationskanälen angebunden werden, mit folgenden Verfahrensschritten :
- in einem ersten Verfahrensschritt werden zur Behandlung der Telekommunikationsverbindung (100) Steuerinformationen (115, 116, 215, 216, 315, 316) zwischen der Vorrichtung (10) und dem Telekommunikationssystem (20) über die Schnittstelle (15) ausgetauscht,
- in einem zweiten Verfahrensschritt schaltet das Telekommunikationssystem (20) in Abhängigkeit der ausgetauschten Steuerinformationen (115, 116, 215, 216, 315, 316) den Kommunikationskanal der ersten Gruppe (26 - 28) von Kommunikationskanälen zu einem der zweiten Gruppe (30 - 32) von Kommunikationskanälen durch,
- in einem dritten Verfahrensschritt löst das Telekommunikationssystem (20) den Kommunikationskanal der ersten Gruppe (26 - 28) von Kommunikationskanälen von dem einen der zweiten Gruppe (30 - 32) von Kommunikationkanälen,
- der erste, zweite und dritte Verfahrensschritt werden wiederholt.
